# EUROPÄISCHE PATENTSCHRIFT

(11) **EP 0 619 359 B1**
(45) Veröffentlichungstag und Bekanntmachung des Hinweises auf die Patenterteilung: **26.03.1997**
(21) Anmeldenummer: 94105378.7
(22) Anmeldetag: 07.04.1994
(51) Int. Cl.: C09K 17/00, C05G 3/04

(54) **Bodenverbesserungsmittel sowie Verfahren zu seiner Herstellung**
Soil conditioner as well as method of its preparation
Composition pour améliorer les sols et procédé de sa production

(30) Priorität: 08.04.1993 DE 4311636
(43) Veröffentlichungstag der Anmeldung: 12.10.1994
(73) Patentinhaber: OTAVI MINEN AG, 65760 Eschborn (DE)
(72) Erfinder: Eder, Gerhard, D-65185 Wiesbaden (DE); Paul, Hans-Joachim, D-97877 Wertheim (DE)
(74) Vertreter: Patentanwälte Dr. Solf & Zapf

(56) Entgegenhaltungen:
- EP-A- 0 326 110
- EP-A- 0 353 604
- WO-A-88/10246
- DE-C- 3 820 594

## Beschreibung

Die Erfindung betrifft ein rieselfähiges Bodenverbesserungsmittel aus Perlitgranulat sowie ein Verfahren zu seiner Herstellung.

Perlit ist ein Lavagestein, das zerkleinert, gemahlen und anschließend in einem thermischen Verfahren auf über 1000°C zur Bildung von Schmelzphasen erhitzt wird. Dabei verdampft im Perlit eingeschlossenes Wasser, was zum Blähen des Schmelzprodukts führt. Durch Abkühlung wird die Blähstruktur bewahrt, so daß das Endprodukt ein poröses Gesteinsglas mit Blähstruktur ist, das unter Beibehaltung des Namens Perlit in Granulatform, insbesondere als Bau- oder Dämmstoff vermarktet wird.

Die Blähstruktur des Perlitgranulats weist ein ausgewogenes Verhältnis zwischen geschlossenporigen Zellen und einem kapillar wirkenden Zellgefüge auf. Perlitgranulat kann daher relativ große Mengen Wasser speichern bei gleichzeitiger Beibehaltung eines relativ hohen wasserfreien Luftporengehalts. Die das Wasser pflanzenverfügbar speichernden Poren können einerseits das Wasser durch Saugspannung gegen die Gravitationskraft festhalten, wobei aber andererseits die von Pflanzenwurzeln ausgeübte Saugkraft so groß ist, daß diese Saugkraft den Poren das Wasser entziehen kann. Die bei vollständiger Wassersättigung gefüllten Grobporen können das Wasser gegen die Gravitationskraft nicht festhalten und stellen demgemäß die zur Belüftung des Bodens erforderliche Luft bzw. zur Wurzelatmung erforderlichen Sauerstoff zur Verfügung. Zudem weist Perlitgranulat noch Poren auf, die das Wasser derart stark binden, daß es durch die Saugkraft der Wurzeln nicht entzogen werden kann.

Perlitgranulat weist somit auch eine ausgewogene und günstige Gliederung des Porenraums bezüglich der wasserverfügbar speichernden Poren und der luftspeichernden Poren auf, wobei der Anteil dieser Poren im Vergleich zu den Totwasser speichernden unwirksamen Feinporen, die eine nicht pflanzenverfügbare Wassermenge speichern, relativ hoch ist. Insbesondere diese Eigenschaft hat zur Verwendung von Perlitgranulat als physikalisches Bodenverbesserungsmittel geführt. Dabei sichert das hohe Wasserspeichervermögen bei gleichzeitig hohem Luftporengehalt Pflanzen über längere Zeiträume eine gleichmäßige Wasserversorgung und Belüftung. Wesentlich ist, daß die Wasserabgabe kontinuierlich nahezu unabhängig von den äußeren klimatischen Bedingungen erfolgt. Es konnte festgestellt werden, daß durch die Verwendung von Perlitgranulat die Wurzelknöllchen- und Haarwurzel-Bildung gesteigert wird. Die niedrige Wärmeleitfähigkeit des Perlitgranulats bedingt ein hohes Wärmerückhaltevermögen und schafft gute klimatische Bodenverhältnisse. Perlitgranulat ist als Naturprodukt biologisch unbedenklich, umweltfreundlich, frei von pflanzen- und tierschädigenden Pilzen und Bakterien, chemisch neutral, verträglich mit nahezu jedem Boden, frostbeständig und temperaturbeständig bis 950°C; Perlitgranulat regelt zudem die Zufuhr gelöster Nährstoffe.

Neben der reinen Verwendung des Naturprodukts wird die Verwendung als Bewurzelungssubstrat im Gemenge mit Muttererde und Torf oder mit allen bekannten mineralischen Substraten und Zuschlagstoffen empfohlen, wobei die Wiederbenetzbarkeit insbesondere von Substraten erheblich verbessert wird. Perlitgranulat ermöglicht dabei durch das hohe Wasseraufnahmevermögen bei gleichzeitig hohem Luftporengehalt, daß die Wurzeln selbst bei wassergesättigter Pflanzerde stets ausreichend mit Sauerstoff versorgt werden und daß keine Staunässe entsteht.

Perlitgranulat hat aber auch nachteilige Eigenschaften. Perlitgranulat neigt zum Stauben, die helle Farbe wirkt oft störend und das geringe Gewicht macht die Handhabung schwierig. Zudem fehlt das meist erwünschte pH-Abpufferungsvermögen und Perlitgranulat besitzt keine nennenswerte Kationenaustauschkapazität. Diese Eigenschaften werden zwar von einigen Bodenverbesserungsmitteln gewährleistet, dabei fehlen diesen Bodenverbesserungsmitteln aber die günstigen Eigenschaften des Perlitgranulats.

Aus der DE-PS 38 17 276 ist ein Bodenverbesserungsmittel bekannt, das insbesondere den Stickstoff-, Phosphor- und Kaliumhaushalt des Bodens verbessern soll. Vorgeschlagen wird dazu die Verwendung von Melasse und deren Reststoffe. Als Träger für diese Stoffe werden Granulate aus natürlichen porösen Gläsern vorgeschlagen, unter anderem auch Perlitgranulat, deren freie Oberfläche mit Melasse und/oder deren Reststoffe beschichtet ist. Die Verwendung der porösen Gläser beruht auf der Absicht, deren hohe spezifische Oberfläche als Belegungsfläche auszunutzen, die den Beschichtungsstoff sehr langsam und dosiert abgibt. Das bekannte Mittel kann zudem mit Torf, Humus, Sand, Tonen, Tonmineralen, NPK-Dünger oder Moosboden gemischt werden, so daß deren Eigenschaften als Bodenverbesserungsmittel aggregiert werden. Perlitgranulat dient in diesem Fall somit lediglich als inerter Trägerstoff und verliert durch die Beschichtung bzw. Oberflächenbelegung seine eingangs geschilderten, der physikalischen Bodenverbesserung dienenden Eigenschaften weitgehend.

Zudem ist aus der DE-PS 37 21 012 bekannt, zur Schaffung eines Bodenverbesserungsmittels auf heiße Teilchen aus porösem Material eine Wasserglaslösung aufzusprühen. Dabei soll dem Wasserglas schlagartig Wasser entzogen werden, so daß das Wasserglas koaguliert, wodurch Kieselsäure ausfällt, die mit Bodenmaterial komplexbildend und sorptiv wirken soll. Das bekannte Mittel soll einen Ersatz für teilweise zerstörte Tonmineralien an der Intensivwurzelschicht bilden. Als Trägerstoff für das Wasserglasreaktionsprodukt wird unter anderem Perlitgranulat vorgeschlagen. Auch in diesem Fall werden durch die Oberflächenbelegung die Bodenverbesserungseigenschaften des Perlitgranulats ausgeschaltet und zwar insbesondere dann, wenn - wie vorgeschlagen - die Oberfläche mit weiteren, revitalisierenden Substanzen beladen wird.

Aufgabe der Erfindung ist, dem Perlitgranulat weitere günstige Eigenschaften eines Bodenverbesserungsmittels zu verleihen und demgemäß ein rieselfähiges Pflanzgranulat zur Bodenverbesserung im Garten- und Landschaftsbau sowie zur Verwendung als Substrat für die Hydrokultur zu schaffen, bei dem die oben beschriebenen Nachteile des Perlitgranulats aufgehoben sind und das zudem eine noch höhere nutzbare Wasserkapazität aufweist.

Diese Aufgabe wird durch die Merkmale des Anspruchs 1 gelöst. Vorteilhafte Weiterbildungen der Erfindung werden in den Unteransprüchen gekennzeichnet.

Im Rahmen der Erfindung wird Perlitgranulat nicht als Trägerstoff mißbraucht, sondern es bleiben die vorteilhaften Eigenschaften für die Bodenverbesserung erhalten, wobei aber zudem die Anwendungsbreite des Bodenverbesserungsmittels ganz erheblich erweitert wird.

Bekannt ist, daß tonmineralreiche Substrate einen Teil des Wassers so fest binden, daß dieser von den Pflanzenwurzeln nicht aufgenommen werden kann. Andererseits weisen diese Substrate hohe Speicherkapazität für Nährstoffe (Kationenaustauschkapazität) und eine gute Pufferung gegen pH-Wert-Schwankungen auf.

Aus der DE-PS 36 00 340 ist bekannt, daß poröse Bodenverbesserungsmittel wie Blähton und Blähschiefer zwar Luft- und Feuchtigkeit pflanzenverfügbar optimal speichern, daß aber zum Beispiel bei plötzlich auftretendem Platzregen ein Verschlämmen der Poren erfolgt, indem die Poren des Blähtons und des Blähschiefers durch Feinkorn eines Platzregenschlamms zugesetzt werden, so daß die Speicherkapazität erheblich vermindert wenn nicht gar aufgehoben wird. Zur Lösung dieses Problems soll die speicherbare Luft- und Feuchtigkeitsmenge von Blähton- und Blähschiefergranulat vergrößert und ein Verschlämmen vermieden werden, indem die Granulate in flexible, luft- und wasserdurchlässige schlauchartige Hüllen gefüllt werden. Dieses Verfahren könnte auch für Perlitgranulat angewendet werden, würde aber ebenso wie das bekannte Verfahren sehr kostenintensiv sein, weil das Einsacken in die Hüllen und die Hüllen selbst sehr teuer sind.

Bekannt ist auch mit Nährstoffen aktivierte Tonmineralien üblichen Kultursubstraten zuzusetzen (DE-PS 38 02 376 A1). Die Nährstoffaktivierung ist jedoch aufwendig. Außerdem besteht eine erhebliche Verschlämmungsgefahr für die Substrate bei Verwendung der aktivierten Tonmineralien.

Nach der Erfindung wird vorzugsweise lediglich die von außen zugängliche Oberfläche der Perlitgranulen mit Ton belegt.

Die Umhüllung der Perlitgranulen mit Ton lag nicht nahe, weil zu befürchten war, daß der Ton die Perlitgranulen in einer Art umhüllt, daß es seine besonderen gartenbaulichen Eigenschaften wie vor allem die sehr hohe Wasserkapazität bei gleichzeitig optimaler Luftkapazität in erheblichem Umfang verliert. Es konnte aber festgestellt werden, daß zwar die Wasserkapazität durch die Wasserspeicherfähigkeit des Tons etwas erhöht wird und daß die Luftkapazität sich etwas verringert; beide Eigenschaften bleiben jedoch weit im optimalen Bereich. Dagegen war überraschend, daß die für den Gartenbau wichtige nutzbare Wasserkapazität um 50 bis 100-Volumen-% verbessert werden konnte. Zudem verringerte sich der Gehalt an Feinporen, die das Totwasser speichern, um 20 bis 50 Volumen-%, so daß der Gehalt an nicht pflanzenverfügbarem Wasser reduziert wurde. Woraus diese außerordentlich günstige Verbesserung der physikalischen Eigenschaften des Bodenverbesserungsmittels resultiert, ist derzeit noch nicht bekannt.

Zur Herstellung des erfindungsgemäßen Bodenverbesserungsmittels werden Perlitgranulen mit Tonschlicker besprüht. Verwendbar sind dafür Mehrstoffdüsen, mit denen das zu versprühende Medium mit bestimmtem Druck der Düse zugeführt und mittels eines zweiten Mediums, wie Luft, Dampf oder Gas, vernebelt wird. Das Besprühen kann aber auch mit Einstoffdüsen (Airless-Verfahren) durchgeführt werden. Diese Düsen vernebeln das Medium durch entsprechenden Druck im Medium und spezielle ausgebildete Drallkörper in den Düsen.

Das Besprühen erfolgt vorzugsweise in einem Trommeltrockner mit der Ton-Wasser Suspension (Schlicker), in der das Ton-Wasser-Verhältnis abhängig vom verwendeten Ton zwischen 30 bis 50 Gew.-% Ton und 70 bis 50 Gew.-% Wasser liegt. Der Ton wird als Tonmehl in einem Rührwerk, in einem Zwangsmischer oder mit einem Quirl mit Wasser zu einem dünnflüssigen Brei angerührt. Verwendet werden insbesondere Gartenbautone mit hohem Anteil von quellfähigen Dreischichttonmineralien, wie Montmorillonit. Perlitgranulat wird in Körnungen von 0 bis 1 mm oder 0 bis 2 mm oder 0 bis 3 mm oder 0 bis 5 mm oder 0 bis 6 mm oder 2 bis 5 mm oder 3 bis 6 mm verwendet. Es sind jedoch auch feinere, gröbere oder durch Absieben hergestellte Körnungen verwendbar. Nach dem Besprühen wird gegebenenfalls getrocknet, wenn das besprühte Produkt nicht ausreichend rieselfähig ist.

Die Menge des aufgebrachten Tons hängt vor allem von der Oberfläche der eingesetzen Perlitkörnung ab. Durch Aufsprühen werden zum Beispiel je nach Körnung 30 bis 500 g Ton je Liter Perlitgranulat aufgebracht. Auf diese Weise läßt sich der Grad der Kationenaustauschkapazität im Bereich von 20 bis 400 mval/1 Neuprodukt einstellen.

Da die Schlickerkonzentration nicht beliebig verändert werden kann, um eine gleichmäßige Kontaktierung der Perlitgranulen zu erreichen, kann für hohe Kationenaustauschkapazitätsforderungen im Endprodukt die Tonmenge des Schlickers durch Verwendung geeigneter Tonverflüssiger, wie zum Beispiel Soda, Polyphosphaten oder Huminsäuren und deren Salze, in Mengen von 0,5 bis 10 Gew.-%, bezogen auf den Tongehalt, gesteigert werden. Durch die Zugabe von zum Beispiel geeigneten Huminsäuren bzw. deren Salze läßt sich die gesamte Ionenkapazität erhöhen. Da eine zu hohe Zugabe von Huminsäuren die Viskosität des Tonschlickers hinsichtlich der Bedüsungseignung negativ beeinflußt, sollte die Zugabe einen Anteil von 10 Gew.-%, bezogen auf den Tongehalt, nicht überschreiten. Durch eine Zugabe in dem angesprochenen Bereich läßt sich die Kationenaustauschkapaztität um bis zu 20 mval/1 Endprodukt steigern. Da die Steigerung pH-Wert abhängig ist, können auch wesentlich höhere Kationenaustauschkapazitäten festgestellt werden.

Das erfindungsgemäße Bodenverbesserungsmittel kann aber auch dadurch hergestellt werden, daß Perlitgranulen in einen Tonschlicker getaucht werden. Dabei wird die Tonmengendosierung über die Schlickerkonzentration geregelt. Ferner ist möglich, trockenen Ton auf angefeuchtete Perlitgranulen aufzustäuben.

Der Ton verringert die nutzbare Wasserkapazität des Bodenverbesserungsmittels nicht. Auch die Luftkapazität wird nicht beeinträchtigt. Wesentlich ist, daß der Ton auch nicht derart abgeschlämmt wird, daß seine Wirkung verlorengeht.

Es konnte festgestellt werden, daß die Menge des aufgedüsten Tones je Liter Endprodukt neben der Austauschkapazität auch die Wasser- und Luftkapazität beeinflußt. Die Erhöhung des Tongehaltes bezogen auf den Liter Reinperlit ist proportional zur Erhöhung der nutzbaren Wasserkapazität sowie einer Verringerung des nicht pflanzenverfügbaren Wassers bei nur geringer Verringerung der Luftkapazität.

Mit der Erfindung gelingt es, die Nachteile des Perlitgranulats zu kompensieren. Das neue Produkt staubt nicht, hat eine natürliche Farbe und ein günstiges Gewicht und weist ein gutes pH-Abpufferungsvermögen sowie eine ausreichende Kationenaustauschkapazität auf. Diese günstigen Eigenschaften werden auf einfache Weise gewährleistet, nämlich durch die Belegung der Oberfläche der Perlitgranulen mit Ton, ohne daß der Ton gebrannt werden muß. Die Haftung des Tons auf der Oberfläche ist gut, so daß der Ton auch nicht ohne weiteres abgeschlämmt werden kann. Das neue Produkt wird auch nicht verschlämmt; offenbar wirkt die Oberflächenbelegung einer Verschlämmung entgegen. Man war bisher der Meinung, daß man für den Garten- und Pflanzenbau den Ton nur verwenden kann, wenn er gebrannt wird, um ihn als Hydrokultursubstrat langfristig haltbar zu machen, d. h. unter Wasserkontakt stabil zu halten. Durch das Brennen aber verliert der Ton seine hervorragenden Eigenschaften der Kationenaustausch- und Pufferkapazität und dient nur noch als reiner Wasserspeicher.

Nach einer besonderen Ausführungsform der Erfindung wird dafür gesorgt, daß für bestimmte Anwendungen, wie zum Beispiel als Substrat für die Hydrokultur, die Abschlämmung des Tons nahezu vollständig unterbunden wird. Dabei verliert der Ton weder seine Wasserspeicherfähigkeit noch seine Kationenaustauschkapazität. Bei anderen Anwendungen, wie zum Beispiel im Garten- und Landschaftsbau, kann dagegen eine gewisse Tonabschlämmung vom Perlitkorn akzeptiert werden.

Die Erfindung sieht in diesem Zusammenhang vor, dem mit Ton kontaktierten Perlit-Bodenverbesserungsmittel ein zum Beispiel speziell für den Einsatz im Garten- und Landschaftsbau entwickeltes Phenyl-terminiertes Polybutadien, das zum Beispiel unter dem Handelsnamen TERRAVEST der Fa. Hüls im Handel ist, zuzugeben. Das Polybutadien, das vollkommen umweltverträglich ist, kann entweder direkt dem Schlicker zugesetzt oder in einem zweiten Bedüsungsvorgang nach dem Aufbringen des Tons aufgedüst werden. Vorzugsweise wird es dem Schlicker zugesetzt, weil dadurch ein Bedüsungsvorgang eingespart werden kann. Beim zweiten Bedüsungsvorgang kann jedoch der Polybutadien-Bedarf, bezogen auf den Tongehalt, reduziert werden. Polybutadien unterdrückt die Abschlämmneigung des Tons. Dabei ist zu beachten, daß Zusatzmengen bis etwa 3 g pro Liter Körnung die Abschlämmung verstärken und sich erst im Bereich von über 3 g pro Liter eine wesentliche Verbesserung der Tonhaftung einstellt. Die Zugabe des Polybutadiens hat nur einen unmerklichen Einfluß auf die sonstigen Eigenschaften des erfindungsgemäßen Produkts. Die Luftkapazität verringert sich nur marginal und bleibt im optimalen Bereich. Auch die nutzbare Wasserkapazität verringert sich nur unwesentlich, so daß beide positiven Eigenschaften des Bodenverbesserungsmittels erhalten bleiben. Bei Verwendung eines Fixiermittels kann die die Perlitgranulat-Eigenschaften verbessernde Menge an Ton gesteigert werden, so daß nicht nur die Oberfläche belegt, sondern sogar eine Hüllschicht um die Perlitgranulen herum gebildet ist, deren Dicke variierbar ist, so daß unterschiedliche Mengen an Hüllton bzw. an Ton aus der die Oberfläche nicht belegendem Ton zur Verfügung stehen können.

In gleicher Weise geeignet ist zum Beispiel ein Keton-Formaldehyd in Kombination mit Celluloseestern (Handelsname Lipaton). Ebenso verwendbar ist Gelatine. Außerdem zeigte die Verwendung von Carboxymethylcellulose gute Ergebnisse ebenso wie an sich bekannte Dispersionsbinder.

Je nach verwendetem Ton ist die Farbe des erfindungsgemäßen Produkts verschieden und hängt von der natürlichen Farbe des Tons ab. Diese Farben gehen von ocker über hellbraun bis dunkelbraun. Auch leicht rote Töne kommen in der Natur vor. Sollte bei bestimmten Anwendungen eine deutlichere Färbung erwünscht sein, so lassen sich zum Einfärben der Granulate feine Pigmentfarben, zum Beispiel Eisenoxidpigmente, verwenden, die dem Tonschlicker feinst verteilt zugesetzt werden können. In der Regel reicht eine Menge von 0,5 bis 5 Gew.-%, bezogen auf den Tongehalt, aus, um eine gute Einfärbung zu erzielen.

Der Ton erhöht zudem das spezifische Gewicht des Perlitgranulats, was gegebenenfalls von Vorteil sein kann, wenn es zum Beispiel der Witterung ausgesetzt ist. Ein Überschuß an Ton ist unschädlich und kann zu einer zusätzlich aggregierenden Wirkung führen und dadurch die Anwendungsbreite des Mittels noch erweitern. Dabei ist überraschend, daß selbst Mengen im Überschuß die Eigenschaften des Perlits bezüglich Wasserspeicherung und Luftporen nicht beeinträchtigen.

Perlit ist zwar pH-neutral, weist aber einen leicht sauren pH-Wert auf. Für einige Anwendungszwecke ist ein pH-Wert des Bodenverbesserungsmittels von über 7 vorteilhaft. Nach der Erfindung wird der pH-Wert des Perlits durch die Oberflächenbelegung mit Ton angehoben unter weitestgehender Beibehaltung der vorteilhaften Eigenschaften als Bodenverbesserungsmittel.

Ton wird bekanntlich ebenfalls als Bodenverbesserungsmittel verwendet, indem insbesondere seine Kationsenaustauschwirkung mit Bodenmaterial und die pH-Wertabpufferung ausgenutzt wird. Der pH-Wert der für die Erfindung geeigneten Tone ist schwach sauer. Es ist daher überraschend, daß die Verwendung von Ton zur Anhebung des pH-Wertes von Perlit dienen kann. Dabei werden der relativ geringen Tonmenge die wesentlichen Eigenschaften des Tons für die Bodenverbesserung, nämlich das Kationenaustauschvermögen und die pH-Wert-Abpufferung, nicht entzogen, so daß der Ton insoweit als Bodenverbesserungsmittel, wenn auch nur geringfügig zur Verfügung steht.

Die Qualität des erfindungsgemäßen rieselfähigen Bodenverbesserungsmittels aus Perlitgranulat, dessen Granulen auf ihrer von außen zugänglichen Oberfläche mit ungebranntem Ton belegt sind, kann nach einer weiteren Ausführungsform der Erfindung bezüglich des Gewichts, der Abschlämmbarkeit des Tons und der Fixierung zusätzlicher additiv wirkender Tonmengen auf sehr einfache Weise verbessert werden, ohne daß die beschriebenen gewünschten günstigen Eigenschaften des neuen Bodenverbesserungsmittels zur Bodenverbesserung beeinträchtigt werden.

Das erfindungsgemäße rieselfähige Bodenverbesserungsmittel, das lediglich aus Perlitgranulat besteht, dessen Granulen oberflächlich mit ungebranntem Ton belegt sind, weist einen pH-Wert zwischen 6,5 und 7,5 auf. Das Schüttgewicht liegt etwa zwischen 150 bis 250 g pro Liter und ist dabei im wesentlichen abhängig vom Tongehalt.

Zur Erhöhung des Gewichts für bestimmte Anwendungsfälle kann dem Perlitgranulat ein Bimsgranulat zum Beispiel mit etwa gleichen Korngrößen und gleicher Kornverteilung zweckmäßigerweise vor der Behandlung mit Tonschlicker zugemischt werden. Die Zusatzmenge des Bimsgranulats richtet sich nach der gewünschten Schüttdichte bzw. Trockenrohdichte bzw. dem Litergewicht des Bodenverbesserungsmittels, die auf diese Weise zum Beispiel über 250, insbesondere auf etwa 350 g pro Liter und mehr gebracht werden kann. Vorzugsweise wird ein Bimsgranulat mit einer Körnung von 0 bis 4, insbesondere von 1 bis 3 mm verwendet. Die Granulen des Bimsgranulats werden ebenfalls mit dem ungebrannten Ton oberflächlich belegt. Die Adhäsion des Tons ist jedoch nicht so gut wie auf den Perlitgranulen, so daß dieser Methode, das Gewicht des Bodenverbesserungsmittels durch den Zusatz von Bimsgranulat zu erhöhen, dort Grenzen gesetzt sind, wo es auf die Einhaltung einer niedrigen Abschlämmbarkeit ankommt.

Zum Beispiel können aus folgenden Mischungen gute Bodenverbesserungsmittel hergestellt werden:
10 bis 50 Vol.-% Bimsgranulat (Körnung 0 bis 4, vorzugsweise 1 bis 3 mm),
50 bis 90 Vol.-% Perlitgranulat (Körnung 0 bis 6, vorzugsweise 2 bis 5 mm),
30 bis 500 g Ton pro Liter Bims/Perlit (als Tonschlicker mit 30 bis 50 Gew.-% Ton und 70 bis 50 Gew.-% Wasser),
0 bis 10 Gew.-% Tonverflüssiger bezogen auf den Tongehalt,
0 bis 5 Gew.-% Farbpigment bezogen auf den Tongehalt,
gegebenenfalls Huminsäuren.

Das Bimsgranulat erhöht die Schüttdichte von zum Beispiel 250 g pro Liter auf über 350 bis etwa 900 g pro Liter. Ein weiterer Vorteil für das Bodenverbesserungsmittel, der mit dem Zusatz von Bimsgranulat einhergeht, ist, daß der pH-Wert je nach Bimsgranulatmenge zwischen etwa 5 bis etwa 8 eingestellt werden kann. Diese Möglichkeit einer pH-Wert-Steuerung erweitert die Anwendungsbreite des erfindungsgemäßen Bodenverbesserungsmittels entsprechend auf Verwendungen, bei denen bestimmte pH-Werte im angegebenen Bereich erwünscht sind.

Wesentlich ist, daß das Granulat die anderen günstigen Eigenschaften des mit Ton belegten Perlitgranulats nicht beeinträchtigt. Anstelle von Bims kann auch ein anderes, zweckmäßigerweise entsprechend poröses, mineralisches Granulat, zum Beispiel Tuff oder dergleichen, verwendet werden, das die Schüttdichte entsprechend erhöht.

Eine weitere besonders fiktive Methode, das Gewicht des erfindungsgemäßen Bodenverbesserungsmittels zu erhöhen, ist, Feinperlit in einer Körnung unter zum Beispiel 40 µm, vorzugsweise unter 32 µm, dem Tonschlicker zuzusetzen, oder - was besonders zweckmäßig ist - in trockener Form mit dem mit Tonschlicker belegten Perlitgranulat zu mischen, wobei die Feinperlitpartikel zumindest teilweise bzw. teilmengenweise in die noch frische, feuchte Tonschicht eindringen, dabei Wasser adsorbieren und die Rieselfähigkeit des Granulats bewirken. Feinperlit ist in der Regel ein Abfallprodukt, das beim Blähen anfällt und demgemäß auch aus geblähtem Perlit besteht.

Je nach Zusatzmenge an Feinperlit kann die Schüttdichte des Endprodukts ohne weiteres auf über 250, zum Beispiel auf 350 g pro Liter und darüber eingestellt werden. Genaue Angaben über die Zusatzmenge lassen sich nicht machen; es wird jeweils für den Anwendungfall des Bodenverbesserungsmittels empirisch die optimale Zusatzmenge für eine bestimmte Schüttdichte zu ermitteln sein. Beispielsweise kann dabei das Gewichtsverhältnis von Ton zu Feinperlit etwa 4 : 1 bis etwa 1,5 : 1 betragen.

Als artgleiches Produkt zum Perlitgranulat verschlechtert der Feinperlit die guten Bodenverbesserungseigenschaften des erfindungsgemäßen Bodenverbesserungsmittels nicht.

Ein besonderer weiterer Vorteil wird erzielt, wenn - wie bereits angegeben - der Feinperlit nach dem Aufbringen des Tonschlickers zugemischt wird. Die Feinperlitpartikel sind stark hygroskopisch und adsorbieren beim Kontaktieren der Granulen Wasser zum Beispiel aus der Tonschicht und den Perlitgranulen derart, daß die Rieselfähigkeit des erfindungsgemäßen Bodenverbesserungsmittels ohne zusätzliche Trocknung erzielt werden kann. Das von den Feinperlitpartikeln adsorbierte, in den Partikeln verbleibende Wasser ist unschädlich; es trägt vielmehr teilmengenweise sogar zur Erhöhung der pflanzenverfügbaren Wassermenge bei und bewirkt die Erhöhung der Schüttdichte des Granulats durch die Erhöhung der Naßdichte des Feinperlits.

Der Zusatz von trockenem Feinperlit kann auch zu einem Zwischenprodukt erfolgen, dem bereits Bimsgranulat beigemengt wurde. In diesem Fall wird ebenfalls nicht nur in Kombinationswirkung mit Bimsgranulat die Schüttdichte weiter erhöht, sondern die Wasseradsorption der Feinperlitpartikel genutzt, die Rieselfähigkeit des Bodenverbesserungsmittels ohne Trocknung einzustellen.

Der Feinperlit, der als Zusatzmittel besonders geeignet ist, sollte im angegebenen Körnungsbereich von 0 bis 40, insbesondere 0 bis 32 µm eine Schüttdichte von 70 bis 140 g pro Liter, eine Stampfdichte von 100 bis 200 g pro Liter und eine Naßdichte von 300 bis 400 g pro Liter haben. Die Wirkung des Feinperlits beruht im wesentlichen darauf, daß durch die Wasseradsorption das Gewicht des Feinperlits etwa verdreifacht werden kann. Da der Feinperlit das adsorbierte Wasser im erfindungsgemäßen Bodenverbesserungsmittel festhält und dadurch ein rieselfähiges Granulat gewährleistet, kann somit durch den Zusatz von Feinperlit nicht nur das Gewicht erhöht, sondern auch die Rieselfähigkeit gewährleistet werden.

Nach dieser Ausführungsform der Erfindung enthält die Tonbelegung der Granulen somit Feinperlitpartikel in vorbestimmter Menge zur Erhöhung der Schüttdichte des Bodenverbesserungsmittels und zur Gewährleistung einer ausreichenden Rieselfähigkeit ohne Trocknung des Produkt. Das Bodenverbesserungsmittel weist somit als solches auch die beschriebenen günstigen bodenverbessernden Eigenschaften auf. Es kann aber auch nach einer weiteren Ausführungsform der Erfindung mit wesentlich mehr Ton belegt werden, indem es nicht nur einmal, sondern mehrmals wie beschrieben zunächst mit Tonschlicker und anschließend mit Feinperlit kontaktiert wird. Es werden auf diese Weise entsprechend mehrere Ton/Feinperlit-Schichten auf den Perlitgranulen angeordnet, die aneinander haften; ohne Trockung kann somit ein rieselfähiges Bodenverbesserungsmittel erzeugt werden, das erheblich höhere Mengen an Ton aufweist. Diese zusätzlichen Schichten verschlechtern in überraschender Weise die beschriebenen erwünschten bodenverbessernden Eigenschaften des Bodenverbesserungsmittels nicht; vielmehr werden die bekannten günstigen bodenverbessernden Eigenschaften des ungebrannten Tons im Umfang der zusätzlichen Menge gewonnen.

Die Verwendung von Feinperlit bietet zudem noch einen weiteren besonderen Vorteil. Wird das Feinperlitpartikel enthaltende Produkt in einem Temperaturbereich von zum Beispiel 200 bis 650° C, insbesondere zwischen 350 bis 450° C, mit Wärmeenergie beaufschlagt, finden Reaktionen insbesondere in der Beschichtung statt. Welcher Art die Reaktionen sind, ist noch nicht geklärt. Sehr wahrscheinlich entstehen Perlit-Schmelzphasen, die die Tonpartikel verkleben; möglicherweise kalziniert auch der Ton teilweise und gibt zumindest teilweise physikalisch und chemisch gebundenes Wasser ab, wobei gleichzeitig Reaktionen zwischen gegebenenfalls schon schmelzenden Feinperlitpartikeln und den Tonpartikeln stattfinden. Im Ergebnis führt die Wärmebehandlung zu einer besonders hohen Abschlämmbeständigkeit bezüglich des Tons und einer erhöhten Kornfestigkeit sowie einer erhöhten Abriebfestigkeit der Granulen. Auch diese Behandlung verändert die beschriebenen gewünschten bodenverbessernden Eigenschaften des Bodenverbesserungsmittels, insbesondere bezüglich der Wasser- und Luftverfügbarkeit sowie der Kationenaustauschfähigkeit nicht.

Die Wärmebehandlung führt insbesondere bei Produkten mit erhöhtem schichtweise aufgebrachten Tongehalt zu einem abschlämmfesten und abriebfesten Bodenverbesserungsmittel.

Der Zusatz von Feinperlit bewirkt somit eine Vielzahl von unvermuteten Verbesserungen, die nicht ohne weiteres erkennbar waren; er löst zum Teil auch Entsorgungsprobleme in den Betrieben, in denen bisher der Feinperlit entsorgt werden mußte.

Anhand des folgenden Beispiels ist zu erkennen, auf welch einfache Weise das erfindungsgemäße Feinperlit enthaltende Bodenverbesserungsmittel herstellbar ist.
Vorgemischt werden in einem Wellenmischer 40 Liter Perlitgranulat mit einer Körnung von 0 bis 6 mm mit 10 Liter Bims mit einer Körnung von 1 bis 3 mm. Anschließend werden 13 kg Unschlicker bestehend aus 30 Gew.-% Ton und 70 Gew.-% Wasser im Mischer aufgedüst. Danach werden 18 Liter Feinperlit mit einer Körnung 99% > 32 µm in den Mischer gegeben. Nach kurzer Mischzeit während der die Feinperlitpartikel in die Tonschicht eingedrückt werden, entsteht ein rieselfähiges Granulat, das als solches ein ausgezeichnetes Bodenverbesserungsmittel ist.
Insbesondere zur Erhöhung der Abschlämmbeständigkeit wird ein Teil des auf diese Weise erhaltenen Granulats in eine sogenannte Kalziniertrommel gegeben, in der es im Durchlauf bei 350° C mit Wärmeenergie behandelt wird, so daß ein trocknes, abschlämmfestes und abriebfestes Material mit einer Schüttdichte von etwa 350 g pro Liter besteht.

Anstelle von Feinperlit kann auch ein gleichwirkendes mineralisches Feinprodukt, zum Beispiel aus Vermikulit, Glasmehl, Schaumglas oder dergleichen, verwendet werden, das in entsprechender Weise die Schüttdichte erhöht und/oder die Rieselfähigkeit gewährleistet und/oder die Abschlämmbeständigkeit erhöht.

Aufgrund der Erfindung steht somit ein neues Bodenverbesserungsmittel auf der Basis von Perlitgranulat mit verbesserten Eigenschaften des Perlitgranulats zur Verfügung. Der die Oberfläche der Perlitgranulen belegende, ungebrannte Ton verleiht dem Perlitgranulat aufgrund der Oberflächenbelegung die beschriebenen überlegenen Eigenschaften im Vergleich zum unbehandelten Perlitgranulat.

## Patentansprüche

1. Rieselfähiges Bodenverbesserungsmittel aus Perlitgranulat, gekennzeichnet durch eine Belegung der von außen zugänglichen Oberfläche der Perlitgranulen mit ungebranntem Ton.

2. Bodenverbesserungsmittel nach Anspruch 1,
**dadurch gekennzeichnet,**
daß der Ton in einer Menge von 30 bis 500g pro Liter Perlitgranulat vorliegt.

3. Bodenverbesserungsmittel nach Anspruch 1 und/oder 2,
**dadurch gekennzeichnet,**
daß der Ton einen hohen Anteil an Montmorillonit aufweist.

4. Bodenverbesserungsmittel nach einem der Ansprüche 1 bis 3,
**dadurch gekennzeichnet,**
daß das Perlitgranulat in einer Körnung von 0 bis 6 mm, vorzugsweise von 2 bis 5 mm vorliegt.

5. Bodenverbesserungsmittel nach einem der Ansprüche 1 bis 4,
**dadurch gekennzeichnet,**
daß der Ton ein zugemischtes Farbpigment enthält.

6. Bodenverbesserungsmittel nach einem oder mehreren der Ansprüche 1 bis 5,
**dadurch gekennzeichnet,**
daß der Ton zur Erhöhung der Abschlämmfestigkeit auf der Oberfläche der Perlitgranulen mit einem wasserunlöslichen, die Tonpartikel festhaltenden Fixiermittel festgelegt ist.

7. Bodenverbesserungsmittel nach Anspruch 6,
**dadurch gekennzeichnet,**
daß der Ton auf der Oberfläche der Perlitgranulen mit einem wasserunlöslichen, die Tonpartikel bindenden Netzwerk aus einem Polymeren festgelegt ist.

8. Bodenverbesserungsmittel nach Anspruch 6 und/oder 7,
**dadurch gekennzeichnet,**
daß das Fixiermittel in der Tonbelegung enthalten ist.

9. Bodenverbesserungsmittel nach Anspruch 6 und/oder 7,
**dadurch gekennzeichnet,**
daß das Fixiermittel auf der Tonbelegung aufgebracht ist.

10. Bodenverbesserungsmittel nach einem oder mehreren der Ansprüche 7 bis 9,
**dadurch gekennzeichnet,**
daß das Fixiermittel in Form von phenylterminiertem Polybutadien in einer Menge von über 3 g pro Liter Perlitgranulat vorliegt.

11. Bodenverbesserungsmittel nach einem oder mehreren der Ansprüche 1 bis 6 sowie 8 und 9,
**dadurch gekennzeichnet,**
daß der Ton auf der Oberfläche der Perlitgranulen mit einem Keton-Formaldehyd in Kombination mit Zellulose-Estern festgelegt ist.

12. Bodenverbesserungsmittel nach einem oder mehreren der Ansprüche 1 bis 6 sowie 8 und 9,
**dadurch gekennzeichnet,**
daß der Ton auf der Oberfläche der Perlitgranulen mit einem im wesentlichen Gelatine enthaltenden Mittel festgelegt ist.

13. Bodenverbesserungsmittel nach einem oder mehreren der Ansprüche 1 bis 12,
**dadurch gekennzeichnet,**
daß es zur Erhöhung der Schüttdichte ein Bimsgranulat mit Bimsgranulen aufweist, deren von außen zugängliche Oberfläche ebenfalls mit ungebranntem Ton belegt ist.

14. Bodenverbesserungsmittel nach Anspruch 13,
**dadurch gekennzeichnet,**
daß das Bimsgranulat in einer Körnung von 0 bis 4, vorzugsweise von 1 bis 3 mm, vorliegt.

15. Bodenverbesserungsmittel nach Anspruch 13 und/oder 14,
**dadurch gekennzeichnet,**
daß es 10 bis 50 Vol.-% Bimsgranulat und 50 bis 90 Vol.-% Perlitgranulat aufweist.

16. Bodenverbesserungsmittel nach einem oder mehreren der Ansprüche 13 bis 15,
**dadurch gekennzeichnet,**
daß es einen pH-Wert zwischen 5 und 8 aufweist.

17. Bodenverbesserungsmittel nach einem oder mehreren der Ansprüche 1 bis 16,
**dadurch gekennzeichnet,**
daß es in und/oder auf der Belegung Wasser enthaltende Feinperlitpartikel vorzugsweise mit Partikelgrößen 99% < 40 µm, insbesondere < 32 µm, in Mengen enthält, die aufgrund des adsorbierten Wassers eine Naßdichte aufweisen, die eine Erhöhung der Schüttdichte des Bodenverbesserungsmittels bewirkt.

18. Bodenverbesserungsmittel nach Anspruch 17,
**dadurch gekennzeichnet,**
daß der Feinperlit eine Trockenrohdichte von 70 bis 140 g pro Liter, eine Stampfdichte von 100 bis 200 g pro Liter und eine Naßdichte von 300 bis 400 g pro Liter aufweist.

19. Bodenverbesserungsmittel nach Anspruch 17 und/ oder 18,
**dadurch gekennzeichnet,**
daß der Feinperlit in einem Gewichtsmengenverhältnis von Ton zu Feinperlit von 4 : 1 bis 1,5 : 1 vorliegt.

20. Bodenverbesserungsmittel nach einem oder mehreren der Ansprüche 17 bis 19,
**dadurch gekennzeichnet,**
daß es mehr als eine Belegungsschicht aus Ton und Feinperlit aufweist.

21. Bodenverbesserungsmittel nach einem oder mehreren der Ansprüche 1 bis 6, sowie insbesondere nach einem oder mehreren der Ansprüche 13 bis 20,
**dadurch gekennzeichnet,**
daß die Belegung entwässert und kalziniert ist.

22. Bodenverbesserungsmittel nach Anspruch 21,
**dadurch gekennzeichnet,**
daß die Belegung durch erhärtete Feinperlit-Schmelzphase fixiert ist.

23. Verfahren zur Herstellung des Bodenverbesserungsmittelsmittels nach einem oder mehreren der Ansprüche 1 bis 22,
**dadurch gekennzeichnet,**
daß ein Tonschlicker auf die Granulen aufgesprüht wird.

24. Verfahren nach Anspruch 23,
**dadurch gekennzeichnet,**
daß ein Tonschlicker eingesetzt wird, der einen Tonverflüssiger in Mengen von 0,5 bis 10 Gew.-%, bezogen auf den Tongehalt des Schlickers, enthält.

25. Verfahren nach Anspruch 23 und/oder 24,
**dadurch gekennzeichnet,**
daß der Tonschlicker Huminsäuren bzw. deren Salze enthält.

26. Verfahren nach Anspruch nach einem oder mehreren der Ansprüche 23 bis 25,
**dadurch gekennzeichnet,**
daß der Tonschlicker ein Farbpigment in Mengen von 0,5 bis 5 Gew.-%, bezogen auf den Tongehalt des Schlickers enthält.

27. Verfahren nach einem oder mehreren der Ansprüche 23 bis 26,
**dadurch gekennzeichnet,**
daß der Tonschlicker ein gegen Abschlämmen des Tons wirkendes Fixiermittel enthält.

28. Verfahren nach Anspruch 27,
**dadurch gekennzeichnet,**
daß der Tonschlicker als Fixiermittel ein flüssiges phenylterminiertes Polybutadien in einer Menge von über 3 g pro Liter Perlitgranulen enthält.

29. Verfahren nach Anspruch 27,
**dadurch gekennzeichnet,**
daß der Tonschlicker als Fixiermittel ein Keton-Formaldehyd in Kombination mit Zellulose-Estern enthält.

30. Verfahren nach Anspruch 27,
**dadurch gekennzeichnet,**
daß der Tonschlicker als Fixiermittel ein im wesentlichen Gelatine aufweisendes Mittel enthält.

31. Verfahren nach einem oder mehreren der Ansprüche 23 bis 30,
**dadurch gekennzeichnet,**
daß der Tonschlicker Feinperlit mit Partikelgrößen 99% < 40 µm, insbesondere < 32 µm, in einem Mengenverhältnis von Ton zu Feinperlit von 4 : 1 bis 1,5 : 1 enthält.

32. Verfahren nach einem oder mehreren der Ansprüche 23 bis 30,
**dadurch gekennzeichnet,**
daß das besprühte Granulat unmittelbar nach dem Aufsprühen mit trockenem Feinperlit gemischt wird.

33. Verfahren nach Anspruch 32,
**dadurch gekennzeichnet,**
daß der Feinperlit in einem Mengenverhältnis von Ton zu Feinperlit von 4 : 1 bis 1,5 : 1 zugemischt wird.

34. Verfahren nach einem oder mehreren der Ansprüche 31 bis 33,
**dadurch gekennzeichnet,**
daß nach dem Besprühen bzw. nach dem Zusetzen von Feinperlit kalziniert wird.

35. Verfahren nach Anspruch 34,
**dadurch gekennzeichnet,**
daß bei Temperaturen bis etwa 650° C kalziniert wird.

36. Verfahren nach Anspruch 35,
**dadurch gekennzeichnet,**
daß im Temperaturbereich zwischen 350 und 450° C kalziniert wird.

37. Verfahren nach einem oder mehreren der Ansprüche 34 bis 36,
**dadurch gekennzeichnet,**
daß das Kalzinieren derart durchgeführt wird, daß die Glasphasen der Perlitpartikel Schmelzphasen bilden.

38. Verfahren nach einem oder mehreren der Ansprüche 34 bis 37,
**dadurch gekennzeichnet,**
daß das Kalzinieren derart durchgeführt wird, daß der Ton physikalisch und/oder chemisch gebundenes Wasser abgibt.

## Claims

1. A flowable soil conditioner comprising perlite granules, characterized in that the externally accessible surface of the perlite granules is covered with unfired clay.

2. A soil conditioner according to Claim 1, characterized in that the clay is present in a quantity of from 30 to 500 g per litre of perlite granules.

3. A soil conditioner according to Claim 1 and/or 2, characterized in that the clay has a high proportion of montmorillonite.

4. A soil conditioner according to one of Claims 1 to 3, characterized in that the perlite granules are present in a grain size of from 0 to 6 mm, preferably from 2 to 5 mm.

5. A soil conditioner according to one of Claims 1 to 4, characterized in that the clay contains an admixed coloured pigment.

6. A soil conditioner according to one or more of Claims 1 to 5, characterized in that, to increase the resistance to elutriation, the clay is fixed to the surface of the perlite granules by a water-insoluble fixing agent which fixes the clay particles.

7. A soil conditioner according to Claim 6, characterized in that the clay is fixed to the surface of the perlite granules by a water-insoluble network of a polymer which binds the clay particles.

8. A soil conditioner according to Claim 6 and/or 7, characterized in that the fixing agent is contained in the clay covering.

9. A soil conditioner according to Claim 6 and/or 7, characterized in that the fixing agent is applied to the clay covering.

10. A soil conditioner according to one or more of Claims 7 to 9, characterized in that the fixing agent is present in the form of phenyl-terminated polybutadiene in a quantity of more than 3 g per litre of perlite granules.

11. A soil conditioner according to one or more of Claims 1 to 6 and 8 and 9, characterized in that the clay is fixed to the surface of the perlite granules by a ketone formaldehyde in combination with cellulose esters.

12. A soil conditioner according to one or more of Claims 1 to 6 and 8 and 9, characterized in that the clay is fixed to the surface of the perlite granules by an agent substantially containing gelatine.

13. A soil conditioner according to one or more of Claims 1 to 12, characterized in that, to increase the bulk density, it contains pumice granules comprising granules of pumice whereof the externally accessible surface is also covered with unfired clay.

14. A soil conditioner according to Claim 13, characterized in that the pumice granules are present in a grain size of from 0 to 4, preferably from 1 to 3, mm.

15. A soil conditioner according to Claim 13 and/or 14, characterized in that it contains from 10 to 50% by volume of pumice granules and from 50 to 90% by volume of perlite granules.

16. A soil conditioner according to one or more of Claims 13 to 15, characterized in that it has a pH value of between 5 and 8.

17. A soil conditioner according to one or more of Claims 1 to 16, characterized in that it contains, in and/or on the covering, water-containing fine perlite particles, preferably having particle sizes which are 99% < 40 µm, in particular < 32 µm, in quantities which because of the adsorbed water have a wet density which has the effect of increasing the bulk density of the soil conditioner.

18. A soil conditioner according to Claim 17, characterized in that the fine perlite has a dry bulk density of from 70 to 140 g per litre, a rammed density of from 100 to 200 g per litre and a wet density of from 300 to 400 g per litre.

19. A soil conditioner according to Claim 17 and/or 18, characterized in that the fine perlite is present in a weight quantity ratio of clay to fine perlite of from 4:1 to 1.5:1.

20. A soil conditioner according to one or more of Claims 17 to 19, characterized in that it has more than one covering layer of clay and fine perlite.

21. A soil conditioner according to one or more of Claims 1 to 6, and in particular according to one or more of Claims 13 to 20, characterized in that the covering is dewatered and calcined.

22. A soil conditioner according to Claim 21, characterized in that the covering is fixed by a hardened fine perlite melt phase.

23. A process for the production of the soil conditioner according to one or more of Claims 1 to 22, characterized in that a clay slip is sprayed onto the granules.

24. A process according to Claim 23, characterized in that a clay slip which contains a clay deflocculating agent in quantities of from 0.5 to 10% by weight in relation to the clay content of the slip is used.

25. A process according to Claim 23 and/or 24, characterized in that the clay slip contains humic acids or salts thereof.

26. A process according to one or more of Claims 23 to 25, characterized in that the clay slip contains a coloured pigment in quantities of from 0.5 to 5% by weight in relation to the clay content of the slip.

27. A process according to one or more of Claims 23 to 26, characterized in that the clay slip contains a fixing agent which acts to prevent the clay from elutriating.

28. A process according to Claim 27, characterized in that the clay slip contains as the fixing agent a liquid phenyl-terminated polybutadiene in a quantity of more than 3 g per litre of perlite granules.

29. A process according to Claim 27, characterized in that the clay slip contains as the fixing agent a ketone formaldehyde in combination with cellulose esters.

30. A process according to Claim 27, characterized in that the clay slip contains as the fixing agent an agent substantially including gelatine.

31. A process according to one or more of Claims 23 to 30, characterized in that the clay slip contains fine perlite having particle sizes of 99% < 40 µm, in particular < 32 µm, in a quantity ratio of clay to fine perlite of from 4:1 to 1.5:1.

32. A process according to one or more of Claims 23 to 30, characterized in that the sprayed granules are mixed with dry fine perlite directly after the spraying.

33. A process according to Claim 32, characterized in that the fine perlite is admixed in a quantity ratio of clay to fine perlite of from 4:1 to 1.5:1.

34. A process according to one or more of Claims 31 to 33, characterized in that calcination is carried out after the spraying or after the admixing of fine perlite.

35. A process according to Claim 34, characterized in that calcination is carried out at temperatures of up to approximately 650°C.

36. A process according to Claim 35, characterized in that calcination is carried out in the temperature range between 350 and 450°C.

37. A process according to one or more of Claims 34 to 36, characterized in that the calcination is carried out such that the glass phases of the perlite particles form melt phases.

38. A process according to one or more of Claims 34 to 37, characterized in that the calcination is carried out such that the clay loses physically and/or chemically bound water.

## Revendications

1. Agent d'amélioration du sol en perlite granulée présentant une bonne aptitude à l'écoulement, caractérisé par un revêtement de la surface des granulés de perlite accessible par l'extérieur, par de l'argile non calcinée.

2. Agent d'amélioration du sol selon la revendication 1, caractérisé en ce que l'argile est présente en quantités de 30 à 500 g par litre de perlite granulée.

3. Agent d'amélioration du sol selon la revendication 1 et/ou 2, caractérisé en ce que l'argile présente une teneur élevée en montmorillonite.

4. Agent d'amélioration du sol selon l'une des revendications 1 à 3, caractérisé en ce que la perlite granulée présente une granulométrie de 0 à 6 mm, de préférence de 2 à 5 mm.

5. Agent d'amélioration du sol selon l'une des revendications 1 à 4, caractérisé en ce que l'argile contient en mélange un pigment coloré.

6. Agent d'amélioration du sol selon l'une des revendications 1 à 5, caractérisé en ce que, en vue d'augmenter la résistance à la délitescence, l'argile présente à la surface des granulés de perlite est immobilisée par un agent de fixation insoluble dans l'eau, qui retient les particules d'argile.

7. Agent d'amélioration du sol selon la revendication 6, caractérisé en ce que l'argile présente à la surface des granulés de perlite est retenue par un réseau polymère insoluble et liant les particules d'argile.

8. Agent d'amélioration du sol selon la revendication 6 et/ou 7, caractérisé en ce que l'agent de fixation est contenu dans le revêtement d'argile.

9. Agent d'amélioration du sol selon les revendications 6 et/ou 7, caractérisé en ce que l'agent de fixation est appliqué sur le revêtement d'argile.

10. Agent d'amélioration du sol selon l'une ou plusieurs des revendications 7 à 9, caractérisé en ce que l'agent de fixation présente la forme de polybutadiène à terminaison phényle, en quantité supérieure à 3 g par litre de perlite granulée.

11. Agent d'amélioration du sol selon l'une ou plusieurs des revendications 1 à 6 ainsi que 8 et 9, caractérisé en ce que l'argile présente à la surface des granulés de perlite est immobilisée par une cétone-formaldéhyde en combinaison avec des esters de cellulose.

12. Agent d'amélioration du sol selon l'une ou plusieurs des revendications 1 à 6 ainsi que 8 et 9, caractérisé en ce que l'argile présente à la surface des granulés de perlite est retenue par un agent contenant essentiellement de la gélatine.

13. Agent d'amélioration du sol selon l'une ou plusieurs des revendications 1 à 12, caractérisé en ce que, en vue de l'augmentation de la masse spécifique en vrac, il contient de la pierre ponce granulée dont la surface, accessible depuis l'extérieur, des granulés de pierre ponce est également revêtue d'argile non calcinée.

14. Agent d'amélioration du sol selon la revendication 13, caractérisé en ce que la pierre ponce granulée est présente à une granulométrie de 0 à 4, et de préférence de 1 à 3 mm.

15. Agent d'amélioration du sol selon la revendication 13 et/ou 14, caractérisé en ce qu'il présente de 10 à 50% en volume de pierre ponce granulée et de 50 à 90% en volume de perlite granulée.

16. Agent d'amélioration du sol selon l'une ou plusieurs des revendications 13 à 15, caractérisé en ce qu'il présente un pH entre 5 et 8.

17. Agent d'amélioration du sol selon l'une ou plusieurs des revendications 1 à 16, caractérisé en ce que dans et/ou sur le revêtement, il contient des particules de perlite fine contenant de l'eau, de préférence d'une granulométrie de 99% < 40 µm, en particulier < 32 µm, en quantités qui, à cause de l'eau adsorbée, présentent une masse spécifique à l'état humide qui a pour effet une augmentation de la masse spécifique en vrac de l'agent d'amélioration du sol.

18. Agent d'amélioration du sol selon la revendication 17, caractérisé en ce que la perlite fine présente une masse spécifique brute à sec de 70 à 140 g par litre, une masse spécifique à l'état compacté de 100 à 200 g par litre et une masse spécifique à l'état humide de 300 à 400 g par litre.

19. Agent d'amélioration du sol selon les revendications 17 et/ou 18, caractérisé en ce que la perlite fine est présente dans le mélange dans un rapport en poids de l'argile à la perlite fine de 4:1 à 1,5:1.

20. Agent d'amélioration du sol selon l'une ou plusieurs des revendications 17 à 19, caractérisé en ce qu'il présente plus l'une couche de revêtement en argile et perlite fine.

21. Agent d'amélioration du sol selon l'une ou plusieurs des revendications 1 à 6, ainsi qu'en particulier selon l'une ou plusieurs des revendications 13 à 20, caractérisé en ce que le revêtement est débarrassé de son eau et calciné.

22. Agent d'amélioration du sol selon la revendication 21, caractérisé en ce que le revêtement est fixé par une phase fondue et durcie de perlite fine.

23. Procédé pour la fabrication de l'agent d'amélioration du sol selon l'une ou plusieurs des revendications 1 à 22, caractérisé en ce qu'une barbotine d'argile est pulvérisée sur les granulés.

24. Procédé selon la revendication 23, caractérisé en ce que l'on utilise une barbotine d'argile qui contient un fluidifiant de l'argile en quantités de 0,5 à 10% en poids, calculées sur la teneur en argile de la barbotine.

25. Procédé selon les revendications 23 et/ou 24, caractérisé en ce que la barbotine d'argile contient des acides humiques ou leurs sels.

26. Procédé selon l'une ou plusieurs des revendications 23 à 25, caractérisé en ce que la barbotine d'argile contient un pigment coloré, en quantités de 0,5 à 5% en poids, calculées sur la teneur en argile de la barbotine.

27. Procédé selon l'une ou plusieurs des revendications 23 à 26, caractérisé en ce que la barbotine d'argile contient un agent de fixation contrecarrant la délitescence de l'argile.

28. Procédé selon la revendication 27, caractérisé en ce que la barbotine d'argile contient comme agent de fixation un polybutadiène liquide à terminaisons phényle, en quantité supérieure à 3 g par litre de granulé de perlite.

29. Procédé selon la revendication 27, caractérisé en ce que la barbotine d'argile contient comme agent de fixation une cétone-formaldéhyde en combinaison avec des esters de cellulose.

30. Procédé selon la revendication 27, caractérisé en ce que la barbotine d'argile contient comme agent de fixation un agent présentant essentiellement de la gélatine.

31. Procédé selon l'une ou plusieurs des revendications 23 à 30, caractérisé en ce que la barbotine d'argile contient de la perlite fine d'une granulométrie de 99% < 40 µm, en particulier < 32 µm, dans un rapport de l'argile à la perlite fine de 4:1 à 1,5:1.

32. Procédé selon l'une ou plusieurs des revendications 23 à 30, caractérisé en ce que les granulés ayant reçu la pulvérisation sont mélangés à de la perlite fine séchée immédiatement après pulvérisation.

33. Procédé selon la revendication 32, caractérisé en ce que la perlite fine est mélangée dans un rapport de l'argile à la perlite fine de 4:1 à 1,5:1.

34. Procédé selon l'une ou plusieurs des revendications 31 à 33, caractérisé en ce que l'on effectue une calcination, après la pulvérisation ou après l'addition de perlite fine.

35. Procédé selon la revendication 34, caractérisé en ce que l'on effectue la calcination à des températures pouvant atteindre environ 650°C.

36. Procédé selon la revendication 35, caractérisé en ce que l'on effectue la calcination dans une plage de température entre 350 et 450°C.

37. Procédé selon l'une ou plusieurs des revendications 34 à 36, caractérisé en ce que l'on effectue la calcination de telle sorte que les phases vitreuses des particules de perlite forment des phases fondues.

38. Procédé selon l'une ou plusieurs des revendications 34 à 37, caractérisé en ce que l'on effectue la calcination de telle sorte que l'argile libère l'eau physiquement et/ou chimiquement liée.
